# EUROPÄISCHE PATENTSCHRIFT

(11) **EP 1 614 662 B1**
(45) Veröffentlichungstag und Bekanntmachung des Hinweises auf die Patenterteilung: **17.09.2008**
(21) Anmeldenummer: 04016035.0
(22) Anmeldetag: 07.07.2004
(51) Int. Cl.: C02F 3/02

(54) **Verfahren und Vorrichtung zur Nachbehandlung fetthaltiger Abwässer**
Process and device for the post-treatment of waste water containing fats
Procédé et installation pour le post-traitement des eaux graisseuses

(43) Veröffentlichungstag der Anmeldung: 11.01.2006
(73) Patentinhaber: Kessel GmbH, 85101 Lenting (DE)
(72) Erfinder: Kessel, Bernhard, 85101 Lenting (DE)
(74) Vertreter: Grünecker, Kinkeldey, Stockmair & Schwanhäusser Anwaltssozietät

(56) Entgegenhaltungen:
- EP-A- 0 728 706
- EP-A- 1 146 016
- DE-A- 3 834 244
- DE-U- 20 121 450
- FR-A- 2 659 645

## Beschreibung

Die Erfindung betrifft ein Verfahren gemäß Oberbegriff des Anspruchs 1 oder Anspruchs 2, sowie eine Vorrichtung gemäß Oberbegriff des Patentanspruchs 7.

Bei Verwendung von Schwerkraft-Fettabscheidern sind Anteile an Restfetten, die vom Fettabscheider in dem Abwasser nicht zurückgehalten werden, hinsichtlich der Umwelt-Belastung kritisch. Auch der CSB-Wert (chemischer Sauerstoffbedarf) und der BSB-Wert (biologischer Sauerstoffbedarf) sollen, falls eine biologische Nachbehandlungsstrecke verwendet wird, bestimmte Grenzen nicht überschreiten. Mittels der biologischen Nachbehandlung der Abwässer (Festbettbiologie), die gegebenenfalls mit einer Druckentspannungsflotation kombiniert wird, lassen sich auch scharfe Grenzwerte einhalten. Nachteilig sind jedoch der enorme Platzbedarf solcher Nachbehandlungsstrecken und ein begrenzter Durchsatz.

Bei der aus DE 201 21 450 U bekannten Vorrichtung ist zwischen dem Schwerkraft-Fettabscheider und dem Bioreaktor als Vorstufe ein Speicherbehälter vorgesehen, der mit seinem Fassungsvermögen auf die Nenngröße des Schwerkraft-Fettabscheiders ausgelegt ist und zum Zwischenspeichem fetthaltiger Abwässer aus dem Fettabscheider dient. Die Zufuhr von Abwasser zum Bioreaktor wird über eine Pumpeinrichtung dosiert, wobei der Speicherbehälter eine Pufferfunktion ausführt. Der Bioreaktor enthält entweder eine biologische Stufe mit einer Wirbelschicht im unteren Bodenbereich, in die Luft eingeblasen wird, oder zwei in vertikaler Richtung voneinander getrennte Wirbelschichtbereiche. Oberhalb der Wirbelschicht ist im Bioreaktor eine Entnahmeeinrichtung mit einer Membrane und einer nachgeschalteten Saugpumpe vorgesehen, die nachbehandelte Abwässer in einen nachgeschalteten Behälter bringt, aus dem die Abwässer in die Kanalisation gelangen können. Bei der Nachbehandlung in der Nachbehandlungsstrecke kann Abwasser über eine oben liegende Rücklaufleitung in den Speicherbehälter zurückgeleitet werden, um das Abwasser im Stapelbehälter zu verdünnen, oder kann das Abwasser im Bioreaktor selbst im Kreislauf geführt werden. Im Stapelbehälter erfolgt keine Nachbehandlung, weil der Stapelbehälter nur der Zwischenspeicherung und der dosierten Versorgung des Bioreaktors dient.

Die Nachbehandlungsstrecke beansprucht wegen des großen Speicherbehälters und dem groß auszulegenden Bioreaktor viel Einbauraum. Der Bioreaktor ist nämlich im Wesentlichen alleine für die Nachbehandlung des Abwassers verantwortlich. Da er ausschließlich dosiert über eine Pumpeinrichtung beschickt und auch nachbehandeltes Abwasser durch eine Membrane abgesaugt wird, ist der mögliche Durchsatz begrenzt. Der Kreislaufbetrieb im Bioreaktor führt relativ schnell zur Verringerung des Nährstoffgehalts im Abwasser und zum Aktivitätsverlust im Bioreaktor. Lange Pausen ohne Zufluss von Abwasser reduzieren die aktive Biomasse und verringern die Reinigungsleistung der Nachbehandlungsstrecke.

Aus EP 0 074 530 B1 ist ein Verfahren zum Nachbehandeln von Abwässern mit einem elektrisch bestimmten Elektrolyse-Aggregat mit Elektroden bekannt. Das Elektrolyse-Aggregat muss bei einer Betriebsunterbrechung mit Frischwasser durchgespült werden, bis der Inhalt des Aggregats durch sauberes Wasser ersetzt ist. Ferner werden Flockungsmittel zugesetzt und wird bei starker Abwasserbelastung ein Filter vorgeschaltet.

Der Erfindung liegt die Aufgabe zugrunde, ein Verfahren der eingangs genannten Art sowie eine Vorrichtung anzugeben, mit denen eine Nachbehandlung mit lipophilen Stoffen belasteter Abwässer platzsparend, kostengünstig und effektiv durchführbar ist.

Die gestellte Aufgabe wird mit den Merkmalen des Patentanspruchs 1, des Patentanspruchs 2 und des Patentanspruchs 7 gelöst.

Wenn verfahrensgemäß zumindest bei einer Unterbrechung der Zufuhr von Abwasser zum Schwerkraft-Fettabscheider (in der Nacht; am Wochenende; an Ruhetagen; in Betriebsferien; oder in einem wählbaren Turnus) die Nachbehandlungsstrecke mit bereits nachbehandeltem Abwasser, in das Druckluft eingespeist wird, im Kreislauf betrieben wird, wird der Bioreaktor durch die fortgesetzte Nachbehandlung des sich qualitativ kontinuierlich verbessemden Abwassers mit abnehmender Anforderung leistungsfähig gehalten, weil die Mikroorganismen weiterhin Nährstoffe erhalten und tätig sein müssen. Die eingespeiste Druckluft (Druckentspannungsflotation) in das bereits nachbehandelte Abwasser trägt zu einem ausgeprägten Abscheideeffekt für aufschwimmende Stoffe (flotierte Stoffe) bei, indem sie kleine Fettpartikel zu größeren Fettteilchen bindet, die aufschwimmen und vom Bioreaktor separiert werden, so dass beim Kreislaufbetrieb die Qualität des Abwassers kontinuierlich zunimmt. Verarbeitet die Nachbehandlungsstrecke später wieder Abwasser aus dem Schwerkraft-Fettabscheider, ist sofort wieder eine hohe Leistungsfähigkeit abrufbar. Das Verfahren ist effizient und kostengünstig. Der Bioreaktor kann wegen der Vorabscheidung in der Vorstufe relativ klein ausgelegt sein, und auch weil er seine Leistungsfähigkeit weitgehend permanent beibehält. Es ergeben sich somit zwei in Kombination wirkende Vorteile, weil einerseits Betriebspausen zum Verbessern des Abwassers bis auf sehr hohe Qualität genutzt werden, und andererseits bei Wiederbeginn normalen Abscheidebetriebs umgehend volle Leistungsfähigkeit vorhanden ist.

Bei dem Verfahren gemäß Anspruch 2 wird im normalen Abscheidebetrieb das Abwasser aus dem Fettabscheider mit Druckluft vermischt und durch den Lamellenseparator in vereinzelten und zwangsweise langen Strömungswegen in den Bioreaktor geleitet, um im Lamellenseparator bereits eine nennenswerte Abscheideleistung mit Druckentspannungsflotation zu erzwingen. Denn die eingespeiste Druckluft zwingt kleinste Fettpartikel, größere Fettteilchen zu formen, die im Lamellenseparator aufschwimmen, abgesondert werden und den Bioreaktor gar nicht erreichen. Dies entlastet den Bioreaktor, der relativ klein ausgelegt werden kann. Es lassen sich bis beispielsweise 20 % der lipophilen Stoffe schon im Lamellenseparator abscheiden.

Dem Abwasser aus dem Fettabscheider kann die Druckluft direkt spätestens beim Eintritt in den Lamellenseparator zugegeben werden und/oder indirekt über im Kreislauf in der Nachbehandlungsstrecke geführtes, schon nachbehandeltes Abwasser, das mit Druckluft vermischt ist.

Zweckmäßig wird die intensive Abscheidewirkung im Lamellenseparator, unterstützt durch das Einspeisen von Druckluft, in Betriebspausen genutzt, in denen bereits nachbehandeltes Abwasser mit Druckluft vermischt und im Kreislauf gepumpt wird, um sukzessive Fettanteile einerseits im Lamellenseparator abzuscheiden und andererseits im Bioreaktor abbauen zu lassen, so dass letztendlich bei Wiederbeginn normalen Abscheidebetriebs sehr günstige Abscheideverhältnisse und eine volle Leistungsfähigkeit, vor allem des Bioreaktors, gegeben sind. Denn durch den Kreislaufbetrieb werden die Mikroorganismen durch Zufuhr von Nährstoffen permanent aktiv gehalten.

Besonders zweckmäßig kann im Kreislaufbetrieb auch der Fettabscheider selbst miteinbezogen werden, so dass letztendlich bei Wiederbeginn normalen Abscheidebetriebs der Fettabscheider nahezu Reinwasser enthält und die darin vorliegende Fettschicht verringert oder weitgehend beseitigt ist.

Hierbei kann es zweckmäßig sein, zumindest beim Kreislaufbetrieb auch Sink- oder Schwimmschlämme im Kreislauf zu pumpen, vorzugsweise auch durch den Fettabscheider selbst. Auf diese Weise wird die gesamte Anlage in Betriebspausen einer Selbstreinigung unterzogen, so dass bei Wiederbeginn normalen Abscheidebetriebs optimale Verhältnisse vorliegen. Außerdem werden die Sink- und/oder Schwimmschlämme, die sich im Lamellenseparator, im Bioreaktor, und gegebenenfalls stromab des Bioreaktors gesammelt haben, im dafür besser geeigneten Fettabscheider gesammelt, aus dem sie leichter entsorgt werden können.

Die Vorrichtung ist so ausgelegt, dass sich im normalen Abscheidebetrieb und auch im Kreislaufbetrieb drei Faktoren auf die Effizienz der Abscheidewirkung auswirken: Der Lamellenseparator schafft getrennte und lange Strömungswege als Vorstufe des Bioreaktors. Im Lamellenseparator findet bereits eine wirksame Abscheidung lipophiler Stoffe statt, die begünstigt wird durch die Einspeisung von Druckluft in das Abwasser. Die Druckluft bringt kleinste Fettpartikel dazu, größere Fettteilchen zu bilden, die in den schrägen Strömungswegen sehr leicht aufschwimmen und als Schwimmschlamm abgesondert werden. Diese lipophilen Stoffe erreichen den Bioreaktor nicht, der sich nur um den Abbau des Restes der lipophilen Stoffe zu kümmern braucht und dadurch entlastet wird. Mit dieser Vorabscheidung im Lamellenseparator werden auch eventuell vorhandene andere Verschmutzungen zurückgehalten, so dass der Bioreaktor in einem gesunden und aktiven Zustand selbst über lange Betriebszeiten bleibt. Dabei ist anzumerken, dass die Druckluft eingespeist wird, um die Abscheidewirkung zu begünstigen (Druckentspannungsflotation), hingegen nur sekundär zum Bewirken eines lebhaften Durchgangs durch den Bioreaktor.

Zweckmäßig ist im Lamellenseparator in Strömungsrichtung aus dem Zulauf hinter Einlässen zu mehreren Spalten zwischen den Lamellen eine Überlaufschwelle vorgesehen, an die sich ein Schwimmschlamm-Sammelraum, z.B. ein Schlammfang, anschließt. Im Betrieb der Nachbehandlungsstrecke werden dank der Druckluftzufuhr nachdrücklich aufschwimmende Stoffe über die Überlaufschwelle in den Sammelraum gebracht. Das Abwasser, das unten aus dem Lamellenseparator in den Bioreaktor übertritt, enthält spürbar weniger Fettanteile, die im Bioreaktor abzubauen sind, wodurch der Bioreaktor entlastet wird, und bei gegebener Gesamtnachbehandlungsleistung klein bauen kann. Ferner hält der Lamellenseparator überraschend auch solche Bestandteile zurück, die im Bioreaktor Probleme bereiten könnten, so dass der Bioreaktor lange effizient arbeitet. Dabei kann die Druckluft über den Spülstrang in das Abwasser aus dem Fettabscheider eingebracht werden, oder über im Kreislauf gefördertes, mit Druckluft vermischtes, bereits nachbehandeltes Abwasser.

Eine Pumpeinrichtung zwischen dem Lamellenseparator und dem Bioreaktor ist entbehrlich. Vorgereinigtes Abwasser tritt vom Lamellenseparator direkt in den Bioreaktor ein. Gegebenenfalls ist ein wahlweise betätigbares Absperr- oder Drosselorgan zwischen dem Ablauf des Lamellenseparators und dem Bioreaktor vorgesehen. Ein oben liegender Überlauf zwischen dem Bioreaktor und dem Lamellenseparator bzw. dem Sammelraum des Lamellenseparators ist zweckmäßig, z.B. um Schlamm abführen zu können.

Die Lamellen sollten unter etwa 60° schräg abfallen. Die Lamellen können eben oder quer zur Durchströmrichtung in den Zwischenräumen zwischen den Lamellen gewellt oder zick-zack-förmig strukturiert sein.

Stromab des Bioreaktors ist ein Schacht zweckmäßig, der einen Sinkschlammfang enthält und über einen oben liegenden Ablauf an das Kanalisationssystem angeschlossen ist. In dem Schacht werden die Sinkschlämme, die aus dem Bioreaktor ausgetragen werden, zurückgehalten. Gegebenenfalls ist zwischen dem Bioreaktor und dem Schacht ein wahlweise betätigbares Absperr- oder Drosselorgan vorgesehen. Der Bioreaktor wird zweckmäßigerweise ebenfalls mit Druckluftzufuhr betrieben, was zur Effizienz des Abbaus der Fettanteile speziell aus Emulsionen beiträgt, und günstige Werte für CSB und BSB ergibt.

Nach einem weiteren, besonders wichtigen Gesichtspunkt ist der Spülstrang zwischen stromab des Bioreaktors und stromauf des Lamellenseparators mit wenigstens einer Pumpe und der Druckluft-Einspeiseeinrichtung vorgesehen. Zweckmäßig erstreckt sich der Spülstrang zwischen dem Sinkschlammfang des dem Bioreaktor nachgeschalteten Ablaufschachts und dem Zulauf des Lamellenseparators. Über den Spülstrang kann jederzeit, und vor allem bei Unterbrechungen der Zufuhr von Abwasser in den Schwerkraft-Fettabscheider, bereits nachbehandeltes Abwasser, gegebenenfalls zusammen mit Bioschlamm, im Kreislauf durch die Nachbehandlungsstrecke gepumpt werden, um den Bioreaktor am Arbeiten zu halten und laufend mit Nährstoffen zu versorgen, und im Lamellenseparator weiterhin Stoffe abzuscheiden bzw. dort abgeschiedene Stoffe zu beseitigen bzw. zu verdünnen. Zweckmäßig kann der Spülstrang sogar bis in den Fettabscheider verlängert werden, um diesen in den Kreislaufbetrieb miteinbeziehen zu können. Dann lässt sich auch die Fettschicht im Fettabscheider reduzieren oder abbauen.

Der Spülstrang sollte eine Ladepumpe und eine Dispersionspumpe enthalten. Mit der Ladepumpe wird ein Vorspanndruck erzeugt, während die Dispersionspumpe eine innige Durchmischung und Konditionierung im Spülstrang vornimmt. Zwischen der Ladepumpe und der Dispersionspumpe sollte die Druckluft-Einspeiseeinrichtung vorgesehen sein. Zweckmäßig ist es, ölfreie Druckluft aus einem Kolbenkompressor einzuspeisen.

Die Schlämme in den Schlammfängen im Schacht, im Bioreaktor und im Lamellenseparator können wahlweise über Saugleitungen und einem Strang abgezogen und z.B. in den Zulauf des Schwerkraft-Fettabscheiders rückgeführt werden, der die Schlämme abscheidet, bis sie entsorgt werden. In diesem Strang wird zweckmäßig eine Druckluftmembranpumpe benutzt, die mittels der Druckluft betrieben wird, die der Kolbenkompressor bereitstellt. Eine Druckluftmembranpumpe ermöglicht es, auch relativ dickflüssige Schlämme problemlos zu pumpen. Dabei kann ebenfalls Druckluft beigemischt werden.

Um die Leistungsfähigkeit zu steigern, ist es zweckmäßig, zumindest zwei parallele Nachbehandlungsstrecken für Wechsel- und/oder Gemeinsambetrieb vorzusehen, die einem oder mehreren Schwerkraft-Fettabscheidern nachgeordnet sind. Wenn eine Nachbehandlungsstrecke die Abwässer aus dem oder den Fettabscheidem verarbeitet, kann z.B. die andere Nachbehandlungsstrecke im Kreislauf betrieben werden.

Anhand der Zeichnung werden Ausführungsformen des Erfindungsgegenstandes erläutert. Es zeigen:
- Fig. 1: eine schematische Ansicht einer Abwasserbehandlungsvorrichtung,
- Fig. 2 und 3: zwei verschiedene grundsätzliche Anordnungsvorschläge, und
- Fig. 4: schematisch eine weitere Abwasserbehandlungsvorrichtung zur Verdeutlichung des Nachbehandlungsverfahrens.

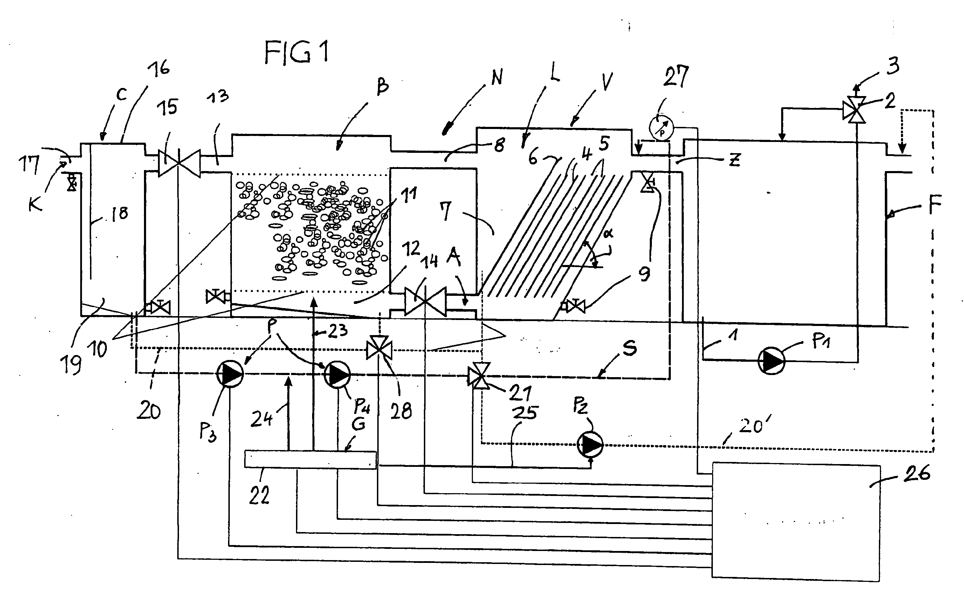

Eine in Fig. 1 schematisch angedeutete Abwasser-Behandlungsvorrichtung umfasst einen Schwerkraft-Fettabscheider F und wenigstens eine Nachbehandlungsstrecke N, die beispielsweise an ein Kanalsystem K angeschlossen ist. Der Schwerkraft-Fettabscheider F weist eine im Bodenbereich angeschlossene Misch- und Entsorgungsleitung 1 mit einer Pumpe P1 und einem Mehrwege-Ventil 2 auf, die einerseits zum oberen Bereich des Fettabscheiders F und andererseits zu einer durch einen Pfeil 3 angedeuteten Entsorgung (z.B. einem Entsorgungsfahrzeug) führt.

Der Auslass des Schwerkraft-Fettabscheiders F ist an einen oben liegenden Zulauf Z einer Vorstufe V der Nachbehandlungsstrecke N angeschlossen, die in der Ausführungsform in Fig. 1 durch einen Lamellenseparator L gebildet wird. Der Lamellenseparator L enthält eine Vielzahl unter einem Winkel α von z.B. 60° schräg gestellter Lamellen 4, die relativ enge Zwischenräume begrenzen, zu denen Einlässe 5 führen. Die Gruppierung der Lamellen 4 wird durch eine gegebenenfalls gegenüber den Einlässen 5 höher gesetzte Überlaufschwelle 6 zu einem Schwimmschlamm-Sammelraum 7 (einem Schlammfang) begrenzt. Aus dem Behälter des Lamellenseparators L führt auch ein oben liegender Überlauf 8 zu einem nachgeschalteten Bioreaktor B. Die angedeuteten Symbole 9 repräsentieren Möglichkeiten zu Probeentnahmen.

Die Lamellen 4 enden im Abstand oberhalb des Grundes des Behälters des Lamellenseparators L, und zwar dort, wo ein tiefliegender Ablauf A über ein wahlweise betätigbares Absperr- oder Drosselorgan 14 zu einem Schlammfangbereich 12 des Bioreaktors B führt. Im Bioreaktor B sind Schwebekörper 11 zwischen oberen und unteren Lochblechen 10 beweglich eingeschlossen. Auf der Höhe des Überlaufes 8 führt vom Bioreaktor B ein Überlauf 13 über ein wahlweise betätigbares Absperr- oder Drosselorgan 15 zu einer Nachstufe C der Nachbehandlungsstrecke N, in der Ausführungsform in Fig. 1 zu einem Schacht 16, der mit einem Auslauf 17 an das Kanalsystem K anschließbar ist, eine im Abstand oberhalb des Bodens endende Rückhaltewand 18 und einen unten liegenden Sinkschlammfang 19 aufweist. Die Schlammfänge 19, 12 und 7 sind über gestrichelt angedeutete Saugleitungen 20 und Ventile 28, 21 in einem Strang 20' an den Zulauf des Schwerkraft-Fettabscheiders F angeschlossen. Im Strang 20' ist eine Förderpumpe P2 enthalten, vorzugsweise eine Druckluftmembranpumpe, die z.B. mit Druckluft über eine Leitung 25 von einem ölfreie Druckluft liefernden Kolbenkompressor 22 angetrieben wird. In den Strang 20' kann über das Ventil 21 gegebenenfalls auch Druckluft eingespeist werden.

Der Kolbenkompressor 22 oder eine andere Art eines Kompressors kann Teil einer Druckluft-Einspeisvorrichtung G sein, mit der über wenigstens eine Leitung 23 Druckluft in den Bioreaktor B in Form feinster Luftperlen einspeisbar ist, und mit der über eine Leitung 24 Druckluft in einen Spülstrang S einspeisbar ist, der sich z. B. vom Schwimmschlammfang 19 über das Ventil 21 zum Zulauf Z des Lamellenseparators L erstreckt. Im Spülstrang S ist eine Pumpeinrichtung P enthalten, die zumindest aus dem Sinkschlammfang 19 Abwasser zum Zulauf Z pumpt. Bei der gezeigten Ausführungsform umfasst die Pumpeinrichtung P eine Ladepumpe P3 und eine dieser nachgeschaltete Dispersionspumpe P4. Die Leitung 24 zum Drucklufteinspeisen ist z.B. zwischen den Pumpen P3, P4 an den Spülstrang S angeschlossen.

Gegebenenfalls ist für die Druckluftmembranpumpe als Förderpumpe P2 ein eigener Kompressor vorgesehen. Die Förderpumpe P2 könnte auch eine andere, auf andere Art angetriebene Pumpe sein. Zumindest beim Zulauf Z ist ein Drucksensor 27 angeordnet, der mit einem eine Steuerung und/oder Programmierung enthaltenden Schaltschrank 26 verbunden ist, an den auch die Ventile und Absperr- bzw. Drosselorgane 21, 28, 14, 15 und die Pumpeinrichtung P angeschlossen sind.

Über den Spülstrang S kann bereits nachbehandeltes Abwasser, gegebenenfalls mit zumindest den dem Sinkschlamm aus dem Schlammfang 19, im Kreislauf in der Nachbehandlungsstrecke N gepumpt werden, wobei über die Ventile 28, 21 gegebenenfalls auch Schlämme zugesetzt werden.

Die Druckluft-Einspeiseinrichtung G ist z.B. so ausgelegt, dass der Lamellenseparator L nach dem Prinzip der Druckentlastungsflotation arbeitet, d.h. kleine Fettpartikel zu größeren Fettteilchen zusammengebracht werden, die im Lamellenseparator L aufschwimmen. Die Druckluft kann über eine nicht gezeigte Einspeisung in den Zulauf und dort direkt in das Abwasser aus dem Fettabscheider F eingebracht werden, oder über den Spülstrang S, dann gegebenenfalls mit schon nachbehandeltem Abwasser.

In dem Lamellenseparator L wird das Abwasser aus dem Fettabscheider F und/oder aus dem Spülstrang S bereits eines Teils von Bestandteilen von Emulsionen entledigt. Diese Bestandteile sind aufschwimmende Stoffe, die beim Durchströmen des Lamellenseparators L entlang der Lamellen 4 nach oben streben bzw. aufsteigen und über die Überlaufschwelle 6 in den Sammelraum 7 gelangen. Da z.B. über den Spülstrang S und die Leitung 24 zusätzlich auch Druckluft oder Abwasser mit Druckluft eingespeist wird, unterstützen die Luftperlen das Aufschwimmen solcher Bestandteile, so dass nach dem Prinzip der Druckentspannungsflotation beispielsweise bis zu 20 % der Bestandteile an lipophilen Stoffen aus Emulsionen, die der Fettabscheider F nicht zurückhalten kann, im Lamellenseparator L zurückgehalten werden. Der Bioreaktor B braucht dann nur noch den Rest der Bestandteile auf biologischem Weg abzubauen, um die geforderten Grenzwerte im schließlich über den Auslass 17 in das Kanalsystem K geleiteten Abwasser einhalten zu können.

Speziell bei einer Unterbrechung der Zufuhr von Abwasser zum Fettabscheider, z.B. während der Nacht, wird die Nachbehandlungsstrecke, gegebenenfalls einschließlich des Fettabscheiders F, mit bereits nachbehandeltem Abwasser im Kreislauf betrieben, um die Qualität des Abwassers zu verbessern, und dem Bioreaktor B Nährstoffe zuzuführen und aktiv zu halten, und auch im Lamellenseparator L weiterhin abzuscheiden. Wird auch der Fettabscheider F in den Kreislauf einbezogen, dann werden darin das Abwasser immer sauberer und die Fettschicht dünner, was für den Neubeginn des normalen Abscheidebetriebs günstig ist.

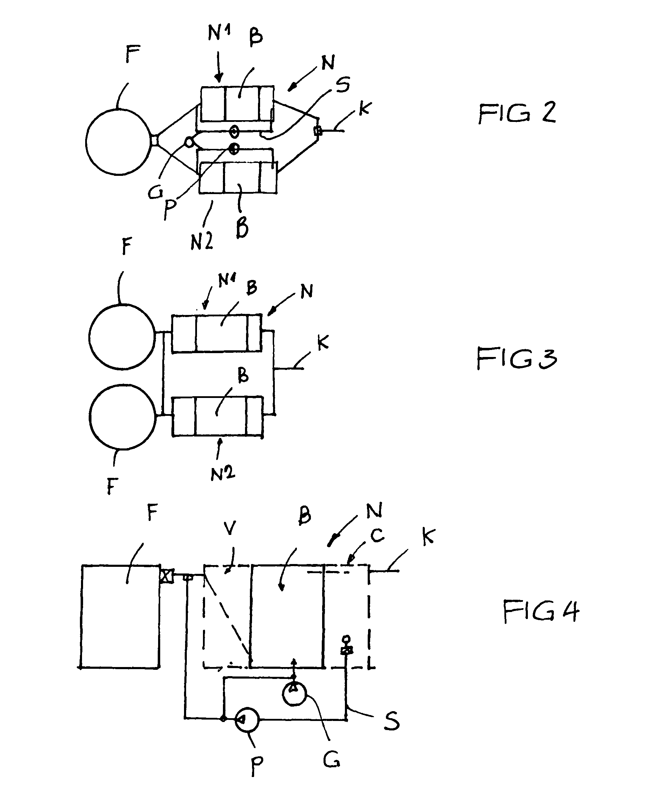

In Fig. 2 sind einem Schwerkraft-Fettabscheider F zwei parallele Nachbehandlungsstrecken N1, N2 nachgeordnet, deren jede über einen Spülstrang S, eine Druckluft-Einspeiseeinrichtung G, und eine Pumpeinrichtung P verfügt. Die beiden Nachbehandlungsstrecken N 1, N2 können wechselweise oder gemeinsam betrieben werden. Bei Wechselbetrieb kann die nicht für Abwässer verwendete Nachbehandlungsstrecke N1 oder N2 im Kreislaufbetrieb arbeiten.

In Fig. 3 sind mehreren Schwerkraft-Fettabscheidern F zwei parallele Nachbehandlungsstrecken N2, N1 nachgeordnet, die an das Kanalsystem K angeschlossen sind und jeweils mindestens einen Bioreaktor B enthalten. Beide Nachbehandlungsstrecken können gemeinsam oder wechselweise arbeiten. Bei wechselweisem Betrieb kann die nicht Abwässer aus einem Fettabscheider verarbeitende Nachbehandlungsstrecke im Kreislaufbetrieb arbeiten. Gegebenenfalls wird aus dieser Nachbehandlungsstrecke sogar im Kreislauf zurückgepumptes, bereits nachbehandeltes Abwasser in die andere Nachbehandlungsstrecke übergeleitet, um dort bei der Abscheidung zu assistieren.

Die in den Fig. 2 und 3 gezeigten Nachbehandlungsstrecken N1, N2 müssen nicht notwendigerweise einen Lamellenseparator L und einen Schacht 16 wie in Fig. 1 aufweisen, sondern könnten auch andere Vorstufen V und Nachstufen C benutzen.

In Fig. 4 ist zwischen einem Schwerkraft-Fettabscheider F und dem Kanalsystem K eine Nachbehandlungsstrecke N vorgesehen, die zumindest einen Bioreaktor B mit einer Druckluft-Einspeiseinrichtung G aufweist. Ferner können in der Nachbehandlungsstrecke N eine Vorstufe V und eine Nachstufe C stromauf bzw. stromab des Bioreaktors B angeordnet sein. Der Spülstrang S führt von der Nachstufe C über die Pumpeinrichtung P zur Vorstufe V, um bei Unterbrechung der Zufuhr von Abwasser zum Fettabscheider F oder bei normalem Abscheidebetrieb bereits nachbehandeltes Abwasser und Druckluft im Kreislaufbetrieb durch die Nachbehandlungsstrecke N zirkulieren zu lassen. Die Druckluft-Einspeiseinrichtung G ist an den Spülstrang S angeschlossen, um z.B. im Kreislaufbetrieb Druckluft einzuspeisen, die, beispielsweise, in der Vorstufe V einen anfänglichen Abscheideeffekt begünstigt, der den Bioreaktor B entlastet, und es ermöglicht, den Bioreaktor effizienter zu nutzen und kleinbauend auszulegen. Der Spülstrang S kann auch im Normalbetrieb benutzt werden, um zumindest einen Teil aus dem bereits nachbehandelten Abwasser und Druckluft vermischt zur Vorstufe V der Nachbehandlungsstrecke zurückzupumpen.

## Patentansprüche

1. Verfahren zum Nachbehandeln von fetthaltigem Abwasser aus zumindest einem Schwerkraft-Fettabscheider (F) in wenigstens einer Nachbehandlungsstrecke (N, N1, N2), die stromab einer Vorstufe (V) zumindest einen Bioreaktor (B) mit Drucklufteinspeisung aufweist, **dadurch gekennzeichnet, dass** zumindest während einer Unterbrechung der Zufuhr von Abwasser in den Fettabscheider (F) wenigstens bereits nachbehandeltes Abwasser aus der Nachbehandlungsstrecke unter Einspeisen von Druckluft in das bereits nachbehandelte Abwasser zurückgeführt und im Kreislauf zumindest durch die Nachbehandlungsstrecke (N, N1, N2) gepumpt wird.

2. Verfahren zum Nachbehandeln von fetthaltigem Abwasser aus zumindest einem Schwerkraft-Fettabscheider (F) in wenigstens einer Nachbehandlungsstrecke (N, N1, N2), die stromab einer Vorstufe (V) mindestens einen Bioreaktor (B) mit Drucklufteinspeisung aufweist, **dadurch gekennzeichnet, dass** in der Nachbehandlungsstrecke (N, N1, N2) Abwasser aus dem Fettabscheider (F) vor dem Einleiten in den Bioreaktor (B) von oben schräg nach unten durch einen die Vorstufe (V) definierenden Lamellenseparator (L) geleitet und zumindest vor oder im Lamellenseparator (L) mit Druckluft vermischt wird.

3. Verfahren nach Anspruch 2, **dadurch gekennzeichnet, dass** dem Abwasser aus dem Fettabscheider (F) beim Eintritt in den Lamellenseparator (L) wenigstens bereits nachbehandeltes mit Druckluft vermischtes Abwasser zugegeben wird.

4. Verfahren nach Anspruch 2, **dadurch gekennzeichnet, dass** zumindest während einer Unterbrechung der Zufuhr von Abwasser in den Schwerkraft-Fettabscheider (F) wenigstens bereits nachbehandeltes Abwasser aus der Nachbehandlungsstrecke mit Druckluft vermischt und zumindest zuerst durch den Lamellenseparator und dann durch den Bioreaktor gepumpt wird.

5. Verfahren nach Anspruch 1 oder Anspruch 2, **dadurch gekennzeichnet, dass** im Kreislauf unter Einbeziehen des Schwerkraft-Fettabscheiders (F) gepumpt wird.

6. Verfahren nach Anspruch 3 oder 4, **dadurch gekennzeichnet, dass** zusätzlich Sink- und/oder Schwimmschlämme im Kreislauf gepumpt werden, vorzugsweise auch durch den Schwerkraft-Fettabscheider (F).

7. Vorrichtung zum Nachbehandeln von fetthaltigem Abwasser aus wenigstens einem Schwerkraft-Fettabscheider (F), mit einer Nachbehandlungsstrecke (N, N1, N2), in der stromab einer Vorstufe (V) zumindest ein eine Druckluft-Einspeisevorrichtung aufweisender Bioreaktor (B) angeordnet ist, **dadurch gekennzeichnet, dass** als Vorstufe (V) zwischen dem Schwerkraft-Fettabscheider (F) und dem Bioreaktor (B) wenigstens ein Lamellenseparator (L) vorgesehen ist, der einen oben liegenden Zulauf (Z) vom Fettabscheider (F) und einen unten liegenden Ablauf (A) zum Bioreaktor (B) sowie zum Abscheiden aufschwimmender Stoffe in Strömungsrichtung vom Zulauf (Z) zum Ablauf (A) schräg abfallende Lamellen (4) aufweist, und dass zumindest an den Lamellenseparator (L) eine Druckluft-Einspeisevorrichtung (G) und ein Spülstrang (S) für bereits behandeltes Abwasser angeschlossen sind.

8. Vorrichtung nach Anspruch 7, **dadurch gekennzeichnet, dass** der Lamellenseparator (L) in Strömungsrichtung aus dem Zulauf (Z) hinter Einlässen (5) zu den Lamellen (4) eine Überlaufschwelle (6), vorzugsweise zu einem tieferliegenden Schwimmschlamm-Sammelraum (7), aufweist.

9. Vorrichtung nach Anspruch 7, **dadurch gekennzeichnet, dass** der Ablauf (A) des Lamellenseparators (L) über ein wahlweise betätigbares Absperr- oder Drosselorgan (14) an den Bioreaktor (B) angeschlossen ist, und dass zwischen dem Lamellenseparator (L) und dem Bioreaktor (B) ein oben liegender Überlauf (8) vorgesehen ist.

10. Vorrichtung nach Anspruch 7, **dadurch gekennzeichnet, dass** die Lamellen (4) unter einem Winkel (α) von etwa 60° gegenüber der Horizontalen schräg gestellt sind.

11. Vorrichtung nach Anspruch 7, **dadurch gekennzeichnet, dass** stromab des Bioreaktors (B) ein über einen oben liegenden Überlauf (13) speisbarer Schacht (16) mit einem Sinkschlammfang (19) angeordnet ist.

12. Vorrichtung nach Anspruch 7, **dadurch gekennzeichnet, dass** der Bioreaktor (B) zwischen oberen und unteren Lochblechen (10) bewegliche Schwebekörper (11) enthält und an die Druckluft-Einspeisevorrichtung (G) angeschlossen ist.

13. Vorrichtung nach Anspruch 7, **dadurch gekennzeichnet, dass** der Spülstrang (S) zwischen stromab des Bioreaktors (B), vorzugsweise zwischen dem Sinkschlammfang (19) in einen dem Bioreaktor (B) nachgeschalteten Schacht (16), und stromauf des Lamellenseparators (L), vorzugsweise dem Zulauf (Z) des Lamellenseparators (L), vorgesehen ist, eine Pumpeinrichtung (P) enthält, und an die Druckluft-Einspeisevorrichtung (G, 24) angeschlossen ist.

14. Vorrichtung nach Anspruch 13, **dadurch gekennzeichnet, dass** der Spülstrang (S) eine Ladepumpe (P3) und eine Dispersionspumpe (P4) enthält, und dass die Druckluft-Einspeisevorrichtung (G, 24) zwischen der Ladepumpe (P3) und der Dispersionspumpe (P4) an den Spülstrang (S) angeschlossen ist.

15. Vorrichtung nach wenigstens einem der vorhergehenden Ansprüche, **dadurch gekennzeichnet, dass** der Schwimmschlamm-Sammelraum (7) des Lamellenseparators (L), ein Bioschlammfang (12) des Bioreaktors (B) und der Sinkschlammfang (19) des dem Bioreaktor (B) nachgeschalteten Schachts (16) über Saugleitungen (20) und einen Strang (20') mit einer Förderpumpe (P2) zumindest an den Schwerkraft-Fettabscheider (F) angeschlossen sind, und dass vorzugsweise der Strang (20') aus der Druckluft-Einspeisevorrichtung (D) mit Druckluft beaufschlagbar ist.

16. Vorrichtung nach wenigstens einem der vorhergehenden Ansprüche, **dadurch gekennzeichnet, dass** die Nachbehandlungsstrecke (N) zumindest zwei parallele Nachbehandlungsstrecken (N1, N2) für Wechsel- und/oder Gemeinsambetrieb umfasst, die einem oder mehreren Schwerkraft-Fettabscheidem (F) nachgeordnet sind, und dass, vorzugsweise der Spülstrang (S) jeder Nachbehandlungsstrecke (N1, N2) wahlweise an den Beginn der einen und/oder der anderen Nachbehandlungsstrecke anschließbar ist.

17. Vorrichtung nach Anspruch 16, **dadurch gekennzeichnet, dass** die Förderpumpe (P2) eine Druckluftmembranpumpe ist, die, vorzugsweise, an einen der Druckluft-Einspeiseeinrichtung (G) zugeordneten, ölfreie Druckluft liefernden Kolbenkompressor (22), anschließbar ist.

## Claims

1. Method for the after-treatment of grease-containing waste water from at least one gravity grease trap (F) in at least one after-treatment section (N, N1, N2) which comprises, downstream of a preliminary stage (V), at least one bioreactor (B) with an intake of compressed air, **characterised in that**, at least during an interruption in the supply of waste water to the grease trap (F), at least waste water from the after-treatment section which has already undergone after-treatment is recycled into the waste water which has already undergone after-treatment, while compressed air is fed in, and is circulated by pumping at least through the after-treatment section (N, N1, N2).

2. Method for the after-treatment of grease-containing waste water from at least one gravity grease trap (F) in at least one after-treatment section (N, N1, N2) which comprises, downstream of a preliminary stage (V), at least one bioreactor (B) with an intake of compressed air, **characterised in that** in the after-treatment section (N, N 1, N2), waste water from the grease trap (F) before being introduced into the bioreactor (B) is fed diagonally from above downwards through a multi-fin separator (L) defining the preliminary stage (V) and is mixed with compressed air at least prior to or in the multi-fin separator (L).

3. Method according to claim 2, **characterised in that** waste water which has already undergone after-treatment and has been mixed with compressed air is added to the waste water from the grease trap (F) as it enters the multi-fin separator (L).

4. Method according to claim 2, **characterised in that** at least during an interruption in the supply of waste water to the gravity grease trap (F), at least waste water from the after-treatment section which has already undergone after-treatment is mixed with compressed air and is pumped at least initially through the multi-fin separator and then through the bioreactor.

5. Method according to claim 1 or claim 2, **characterised in that** the material is pumped round a circuit including the gravity grease trap (F).

6. Method according to claim 3 or 4, **characterised in that** additionally sedimented and/or floating sludges are pumped round, preferably also through the gravity grease trap (F).

7. Apparatus for the after-treatment of grease-containing waste water from at least one gravity grease trap (F), having an after-treatment section (N, N1, N2) wherein at least one bioreactor (B) comprising a compressed air supply device is arranged downstream of a preliminary stage (V), **characterised in that** there is provided, as the preliminary stage (V) between the gravity grease trap (F) and the bioreactor (B), at least one multi-fin separator (L) which comprises at the top an inlet (Z) from the grease trap (F) and at the bottom an outlet (A) to the bioreactor (B) and, for separating off floating substances, fins (4) sloping diagonally downwards in the direction of flow from the inlet (Z) to the outlet (A), and **in that** a compressed air supply device (G) and a flushing section (S) for waste water that has already been treated are connected at least to the multi-fin separator (L).

8. Apparatus according to claim 7, **characterised in that** the multi-fin separator (L) comprises, in the direction of flow from the inlet (Z), behind inlets (5) to the fins (4), an overflow threshold (6), preferably to a floating sludge collector (7) located lower down.

9. Apparatus according to claim 7, **characterised in that** the outlet (A) of the multi-fin separator (L) is connected to the bioreactor (B) via a selectively operable blocking or throttle member (14), and **in that** an overflow (8) situated on top is provided between the multi-fin separator (L) and the bioreactor (B).

10. Apparatus according to claim 7, **characterised in that** the fins (4) are arranged diagonally at an angle (α) of about 60° to the horizontal.

11. Apparatus according to claim 7, **characterised in that** downstream of the bioreactor (B) there is provided a shaft (16) with a trap (19) for sedimented sludge, said shaft being adapted to be fed through an overflow (13) located at the top.

12. Apparatus according to claim 7, **characterised in that** the bioreactor (B) contains buoyancy members (11) that are movable between upper and lower perforated plates (10) and is connected to the compressed air supply device (G).

13. Apparatus according to claim 7, **characterised in that** the flushing section (S) is provided at a point between downstream of the bioreactor (B), preferably between the trap (19) for sedimented sludge in a shaft (16) downstream of the bioreactor (B), and upstream of the multi-fin separator (L), preferably the inlet (Z) of the multi-fin separator (L), contains a pumping device (P) and is connected to the compressed air supply device (G, 24).

14. Apparatus according to claim 13, **characterised in that** the flushing section (S) contains a charging pump (P3) and a dispersion pump (P4), and **in that** the compressed air supply device (G, 24) is connected to the flushing section (S) between the charging pump (P3) and the dispersion pump (P4).

15. Apparatus according to at least one of the preceding claims, **characterised in that** the floating sludge collector (7) of the multi-fin separator (L), a biosludge catcher (12) of the bioreactor (B) and the trap (19) for sedimented sludge of the shaft (16) provided downstream of the bioreactor (B) are connected, via suction lines (20) and a line (20') comprising a delivery pump (P2), to at least the gravity grease trap (F), and preferably the line (20') can be acted upon by compressed air from the compressed air supply device (D).

16. Apparatus according to at least one of the preceding claims, **characterised in that** the after-treatment section (N) comprises at least two parallel after-treatment sections (N1, N2) for alternating and/or joint operation, which are arranged downstream of one or more gravity grease traps (F), and **in that** preferably the flushing section (S) of each after-treatment section (N1, N2) is selectively connectable to the beginning of one and/or the other after-treatment section.

17. Apparatus according to claim 16, **characterised in that** the delivery pump (P2) is a compressed air diaphragm pump which is preferably connectable to a piston compressor (22) associated with the compressed air supply device (G) and delivering oil-free compressed air.

## Revendications

1. Procédé pour le retraitement des eaux usées contenant des matières grasses sortant d'au moins un dégraisseur par gravité (F), dans au moins une chaîne de retraitement (N, N1, N2) qui, en aval d'une étape préliminaire (V), comporte au moins un bioréacteur (B) avec une admission d'air comprimé, **caractérisé en ce que**, au moins pendant une interruption de l'admission des eaux usées dans le dégraisseur (F), au moins des eaux usées déjà retraitées sont renvoyées en sortant de la chaîne de retraitement, sous l'effet de l'admission d'air comprimé, dans les eaux usées déjà retraitées et sont pompées dans le circuit au moins en passant par la chaîne de retraitement (N, N1, N2).

2. Procédé pour le retraitement des eaux usées contenant des matières grasses sortant d'au moins un dégraisseur par gravité (F), dans au moins une chaîne de retraitement (N, N1, N2) qui, en aval d'une étape préliminaire (V), comporte au moins un bioréacteur (B) avec une admission d'air comprimé, **caractérisé en ce que** dans la chaîne de retraitement (N, N1, N2) les eaux usées sortant du dégraisseur (F) sont guidées, avant d'être introduites dans le bioréacteur (B), depuis le haut en oblique vers le bas à travers un séparateur à lamelles (L), définissant l'étape préliminaire (V), et sont mélangées à l'air comprimé en amont du séparateur à lamelles (L) ou dans celui-ci.

3. Procédé selon la revendication 2, **caractérisé en ce que** des eaux usées déjà retraitées et mélangées à l'air comprimé sont ajoutées aux eaux usées sortant du dégraisseur (F) au moment de l'admission de celles-ci dans le séparateur à lamelles (L).

4. Procédé selon la revendication 2, **caractérisé en ce que**, au moins pendant une interruption de l'admission des eaux usées dans le dégraisseur par gravité (F), au moins des eaux usées déjà retraitées sortant de la chaîne de retraitement sont mélangées à l'air comprimé et sont pompées au moins d'abord à travers le séparateur à lamelles et ensuite à travers le bioréacteur.

5. Procédé selon la revendication 1 ou 2, **caractérisé en ce que** le pompage s'effectue dans le circuit en intégrant le dégraisseur par gravité (F).

6. Procédé selon la revendication 3 ou 4, **caractérisé en ce que** des boues décantées et/ou surnageantes sont pompées dans le circuit, de préférence aussi à travers le dégraisseur par gravité (F).

7. Dispositif pour le retraitement des eaux usées contenant des matières grasses sortant d'au moins un dégraisseur par gravité (F), comportant une chaîne de retraitement (N, N1, N2), dans laquelle, en aval d'une étape préliminaire (V), est monté au moins un bioréacteur (B) comportant un dispositif d'alimentation en air comprimé, **caractérisé en ce que** pour former l'étape préliminaire (V) entre le dégraisseur par gravité (F) et le bioréacteur (B), il est prévu au moins un séparateur à lamelles (L) qui comporte un moyen d'amenée (Z) supérieur venant du dégraisseur (F) et un moyen d'évacuation (A) inférieur menant vers le bioréacteur (B), ainsi que des lamelles (4) destinées à la séparation des matières surnageantes et inclinées en pente descendante dans le sens d'écoulement depuis le moyen d'amenée (Z) vers le moyen d'évacuation (A), et **en ce qu'**un dispositif d'alimentation en air comprimé (G) et une branche d'épuration (S) pour des eaux usées déjà traitées sont raccordées au moins au séparateur à lamelles (L).

8. Dispositif selon la revendication 7, **caractérisé en ce que** le séparateur à lamelles (L) comporte, par référence au sens d'écoulement à partir du moyen d'amenée (Z), derrière des entrées (5) vers les lamelles (4), un seuil de surverse (6) menant de préférence vers un collecteur de boues surnageantes (7) situé plus bas.

9. Dispositif selon la revendication 7, **caractérisé en ce que** le moyen d'évacuation (A) du séparateur à lamelles (L) est raccordé au bioréacteur (B) via un organe d'arrêt ou d'étranglement (14) actionnable au choix, et **en ce qu'**une surverse (8) supérieure est prévue entre le séparateur à lamelles (L) et le bioréacteur (B).

10. Dispositif selon la revendication 7, **caractérisé en ce que** les lamelles (4) sont inclinées en délimitant avec l'horizontale un angle (α) de 60° environ.

11. Dispositif selon la revendication 7, **caractérisé en ce qu'**en aval du bioréacteur (B) est montée une cuve (16), qui est apte à être alimentée par une surverse (13) supérieure et qui est munie d'un collecteur de boues décantées (19).

12. Dispositif selon la revendication 7, **caractérisé en ce que** le bioréacteur (B) comporte des corps flottants (11) mobiles entre des tôles perforées (10) supérieure et inférieure et est raccordé au dispositif d'alimentation en air comprimé (G).

13. Dispositif selon la revendication 7, **caractérisé en ce que** la branche d'épuration (S) est prévue entre une zone en aval du bioréacteur (B), de préférence entre le collecteur de boues décantées (19) situé dans une cuve (16) montée en aval du bioréacteur (B), et une zone en amont du séparateur à lamelles (L), de préférence en amont du moyen d'amenée (Z) du séparateur à lamelles (L), contient un dispositif de pompage (P) et est raccordée au dispositif d'alimentation en air comprimé (G, 24).

14. Dispositif selon la revendication 13, **caractérisé en ce que** la branche d'épuration (S) comporte une pompe de charge (P3) et une pompe de dispersion (P4), et **en ce que** le dispositif d'alimentation en air comprimé (G, 24) est raccordé, entre la pompe de charge (P3) et la pompe de dispersion (P4), à la branche d'épuration (S).

15. Dispositif selon l'une quelconque des revendications précédentes, **caractérisé en ce que** le collecteur de boues surnageantes (7) du séparateur à lamelles (L), un collecteur de boues biologiques (12) du bioréacteur (B) et le collecteur de boues décantées (19) de la cuve (16) montée en aval du bioréacteur (B), sont raccordés au moins au dégraisseur par gravité (F) via des conduites d'aspiration (20) et une branche (20') contenant une pompe de circulation (P2), et **en ce que**, de préférence, la branche (20') sortant du dispositif d'alimentation en air comprimé (G, 24) peut recevoir de l'air comprimé.

16. Dispositif selon l'une quelconque des revendications précédentes, **caractérisé en ce que** la chaîne de retraitement (N) comporte au moins deux chaînes de retraitement (N1, N2) parallèles pour un fonctionnement alterné ou conjoint, qui sont montées en aval d'un ou de plusieurs dégraisseurs par gravité (F), et **en ce que**, de préférence la branche d'épuration (S) de chaque chaîne de retraitement (N1, N2) peut être raccordée au choix au début de l'une et/ou de l'autre chaîne de retraitement.

17. Dispositif selon la revendication 16, **caractérisé en ce que** la pompe de circulation (P2) est une pompe à membrane à air comprimé qui, de préférence, peut être raccordée à un compresseur à piston (22) associé au dispositif d'alimentation d'air comprimé (G) et fournissant de l'air comprimé exempt d'huile.
